# EUROPÄISCHE PATENTSCHRIFT

(11) **EP 1 582 420 B1**
(45) Veröffentlichungstag und Bekanntmachung des Hinweises auf die Patenterteilung: **19.07.2006**
(21) Anmeldenummer: 05000767.3
(22) Anmeldetag: 15.01.2005
(51) Int. Cl.: B60R 21/13

(54) **Überrollschutzsystem für Kraftfahrzeuge mit einem ausfahrbaren Überrollkörper**
Rollover protection device for vehicles with an deployable rollbar
Systéme de protection pour capotage avec un arceau deployable

(30) Priorität: 31.03.2004 DE 102004015808
(43) Veröffentlichungstag der Anmeldung: 05.10.2005
(73) Patentinhaber: ISE Innomotive Systems Europe GmbH, 51702 Bergneustadt (DE)
(72) Erfinder: Berges, Stephan, 51647 Gummersbach (DE); Jesse, Rainer, 51702 Bergneustadt (DE)
(74) Vertreter: Fuchs Mehler Weiss & Fritzsche

(56) Entgegenhaltungen:
- EP-A- 1 227 012
- DE-A1- 19 529 875
- DE-C2- 19 750 693
- US-A- 5 031 949

## Beschreibung

Die Erfindung bezieht sich auf ein Überrollschutzsystem für Kraftfahrzeuge, mit einem verfahrbar gehalterten Überrollkörper, der im Normalzustand gegen die Kraft von mindestens einer vorgespannten Antriebs-Druckfeder durch eine Haltevorrichtung in einer unteren, eingefahrenen Ruhelage haltbar ist, und unter Lösen der Haltevorrichtung durch die Federkraft der Antriebs-Druckfeder in eine verriegelte obere, schützende Stellung bringbar ist, wobei die Haltevorrichtung ein mit dem Überrollkörper verbundenes Halteglied und ein damit in lösbarer mechanischer Wirkverbindung stehendes Auslöseglied an einem fahrzeugfesten, sensorgesteuerten Aktuator aufweist.

Derartige Überrollschutzsysteme dienen zum Schutz der Insassen in Kraftfahrzeugen ohne schützendes Dach, typischerweise in Cabriolets oder Sportwagen bei einem Überschlag, da das Fahrzeug über den Überrollkörper abrollen wird.

Es ist dabei bekannt, einen die gesamte Fahrzeugbreite überspannenden, fest installierten Überrollbügel vorzusehen. Bei dieser Lösung wird der erhöhte Luftwiderstand und das Auftreten von Fahrgeräuschen als nachteilig empfunden, abgesehen von der Beeinträchtigung des Fahrzeugaussehens.

Es ist auch bekannt, jedem Fahrzeugsitz einen höhenunveränderlich fest installierten Überrollbügel zuzuordnen. Diese Lösung wird typischerweise bei Sportwagen zur Unterstreichung des sportlichen Aussehens eingesetzt.

Weit verbreitet bei Cabriolets sind konstruktive Lösungen, bei denen der Überrollkörper im Normalzustand eingefahren ist, und im Gefahrenfall, also bei einem drohenden Überschlag, schnell in eine schützende Position ausgefahren wird, um zu verhindern, dass die Fahrzeuginsassen durch das sich überschlagende Fahrzeug erdrückt werden.

Von einem derartigen verfahrbaren Überrollkörper geht auch die Erfindung aus.

Diese Überrollschutzsysteme weisen typischerweise einen in einem fahrzeugfesten Führungskörper geführten U-förmigen oder aus einem Profilkörper gebildeten Überrollkörper, auf, wobei der Führungskörper in einem Kassetten-Gehäuse befestigt ist. Dieser Überrollkörper wird im Normalzustand gegen die Vorspannkraft einer Antriebs-Druckfeder durch eine Haltevorrichtung in einer unteren Ruhelage gehalten, und ist im Überschlagfall, sensorgesteuert unter Lösen der Haltevorrichtung, durch die Federkraft der Antriebs-Druckfeder in eine obere, schützende Stellung bringbar, wobei eine dann in Wirkeingriff tretende Verriegelungseinrichtung, die Wiedereinfahrsperre, ein Eindrücken des Überrollbügels verhindert. Dabei ist typischerweise jedem Fahrzeugsitz eine Kassette zugeordnet, insbesondere bei den vorderen Fahrzeugsitzen. Im Fond können die Kassetten auch in einer Rückwand-Baueinheit integriert sein.

Eine derartige Kassetten-Konstruktion eines Überrollbügelschutzsystems mit einem U-förmigen Überrollbügel zeigt beispielsweise die DE 43 42 400 A 1; eine alternative Kassettenkonstruktion mit einem Überrollkörper in Form eines Profilkörpers zeigt insbesondere die DE 198 38 989 C1.

Die vorgenannte Haltevorrichtung für die ausfahrbaren Überrollkörper besitzt typischerweise ein am Überrollkörper befestigtes Halteglied, das in lösbarer mechanischer Wirkverbindung mit einem Auslöseglied an einem fahrzeugfesten, sensorgesteuerten Auslösesystem, dem Aktuator, steht, der durch einen Auslösemagneten, den sogenannten Crashmagneten, oder durch ein pyrotechnisches Auslöseglied, gebildet ist. Das Halteglied ist bei zahlreichen Konstruktionen, z.B. gemäß DE 100 12 573 C1, als Haltebolzen ausgebildet, der z.B. über eine Wippe oder ein anderes, Toleranzen ausgleichendes, Verbindungselement mit dem Überrollkörper verbunden ist, und der mit einer das Auslöseglied bildenden hakenförmigen Drehklinke des Aktuators, vorzugsweise eines Doppelklinken-Aktuators nach DE 197 50 693 C1, im lösbaren Wirkeingriff steht. Das Grundprinzip einer hakenförmigen Drehklinke als Auslöseglied in Verbindung mit einem pyrotechnischen Aktuator zeigt auch die DE 43 42 401 A1 (Fig. 7).

Bei einem derartigen Klinken-Haltesystem muss zur Auslösung des Überrollkörpers nicht nur der Reibwiderstand zwischen Drehklinke und Haltebolzen überwunden werden, sondem auch Reibkräfte innerhalb des Auslösegliedes des Aktuators. Da die hakenförmige Drehklinke nur mit einer begrenzten Fläche am Haltebolzen anliegt, ist der Anpressdruck dabei sehr hoch. Femer besteht typbedingt bei Klinkensystemen die Gefahr des Zurückverriegelns.

Der Erfindung liegt die Aufgabe zugrunde, das eingangs bezeichnete Überrollschutzsystem hinsichtlich der Haltevorrichtung so auszubilden, dass bei einer Auslösung weniger Reibwiderstand als im bekannten Fall zu überwinden ist und keine Gefahr des Zurückverriegelns besteht.

Die Lösung dieser Aufgabe gelingt bei einem Überrollbügel, der im Normalzustand gegen die Kraft von mindestens einer vorgespannten Antriebs-Druckfeder durch eine Haltevorrichtung in einer unteren, eingefahrenen Ruhelage haltbar ist, und unter Lösen der Haltevorrichtung durch die Federkraft der Antriebs-Druckfeder in eine verriegelte obere, schützende Stellung bringbar ist, wobei die Haltevorrichtung ein mit dem Überrollkörper verbundenes Halteglied und ein damit in lösbarer mechanischer Wirkverbindung stehendes Auslöseglied an einem fahrzeugfesten, sensorgesteuerten Aktuator aufweist, gemäß der Erfindung dadurch, dass das Halteglied durch einen Zugstab mit einer zumindest teilweise umlaufenden Nut am auslöseseitigen Ende und das Auslöseglied durch einen in einem fahrzeugfesten Lagerbock gehalterten, formschlüssig in der Nut aufnehmbaren und durch den Aktuator in dem Lagerbock aus einer haltenden in eine freigebende Wirkstellung verdrehbaren oder längs verschiebbaren Sperr-/Auslöseschieber gebildet ist.

Bei dem erfindungsgemäßen Haltesystem erfolgt das Niederhalten des Überrollkörpers direkt, d.h. ohne Zwischenglieder wie Klinken usw. Zur Auslösung muss einmal der Reibwiderstand zwischen dem Sperr-/Auslösschieber und seiner Lagerung bei seiner radialen oder axialen Bewegung von der haltenden in die freigebende Wirkstellung und zum anderen der Reibwiderstand beim Lösen des relativ großflächigen Formschlusses zwischen Sperr-/Auslöseschieber und der Nut des Zugstabes überwunden werden. Beide Reibwiderstände sind relativ klein. Ferner besteht keine Gefahr des Zurückverriegelns wie bei Klinkensystemen.

Die DE 199 60 764 A1 zeigt ein Überrollschutzsystem für Kraftfahrzeuge mit einem U-förmigen verfahrbar gehalterten Überrollbügel, der ein Antriebsquerjoch aufweist, auf welches eine vertikal ausgerichtete Antriebs-Kolbenstange einwirkt, die in einem Zylinderrohr geführt ist, an dessen unterem Ende ein Antriebskolben in Verbindung mit einem sensorgesteuerten Gasgenerator als Antrieb für den Überrollbügel angebracht ist. Eine Verriegelungseinrichtung fixiert dabei die Kolbenstange mit Antriebskolben in der Ruhelage, in welcher keine Vorspannkräfte wirken. Die Verriegelungseinrichtung besteht in der Hauptvariante aus einem im Zylinderrohr angebrachten Verriegelungskranz von flexiblen Verriegelungshaken, die im Ruhezustand im Wirkeingriff mit einer nutartigen Hinterschneidung an einem Verriegelungsdorn des Antriebskolbens stehen und beim Zünden des Gasgenerators durch einen separaten Entriegelungskolben außer Wirkeingriff gedrückt werden, so daß der Gasgenerator den Überrollbügel ausfahren kann.

Diese bekannte Verriegelungseinrichtung kann nur bei Überrollschutzsystemen mit einer pneumatischen oder hydraulischen Antriebsquelle eingesetzt werden. Sie hat femer einen komplexen Aufbau und benötigt flexible, auf Biegung beanspruchte Verriegelungselemente.

Die DE 195 29 875 A1 zeigt ein Überrollschutzsystem der eingangs genannten Art mit einem Halteglied in Form einer Haltestange, die mit einer umlaufenden Nut für einen lösbaren Wirkeingriff mit radial beweglich angeordneten Rastkugeln eines Kugelschlosses versehen ist. Kugelschlösser dieser Art haben einen relativ komplexen Aufbau und müssen mit sehr geringen Toleranzen hergestellt und montiert werden.

Ausgestaltungen der Erfindung sind in Unteransprüchen gekennzeichnet sowie ergeben sich aus der nachfolgenden Figurenbeschreibung.

Anhand eines in der Zeichnung dargestellten Ausführungsbeispieles wird die Erfindung näher beschrieben.

Es zeigen:
- Fig. 1: in einer stark schematisierten isometrischen Darstellung das erfindungsgemäße Haltesystem eines ausfahrbaren Überrollschutzsystems mit Zugstab und in einer fahrzeugfesten Halterung drehbeweglichen Sperr-/Auslöseschieber im haltenden Zustand, und
- Fig. 2: in einer entsprechenden Darstellung das Haltesystem nach Fig. 1 im ausgelösten Zustand.

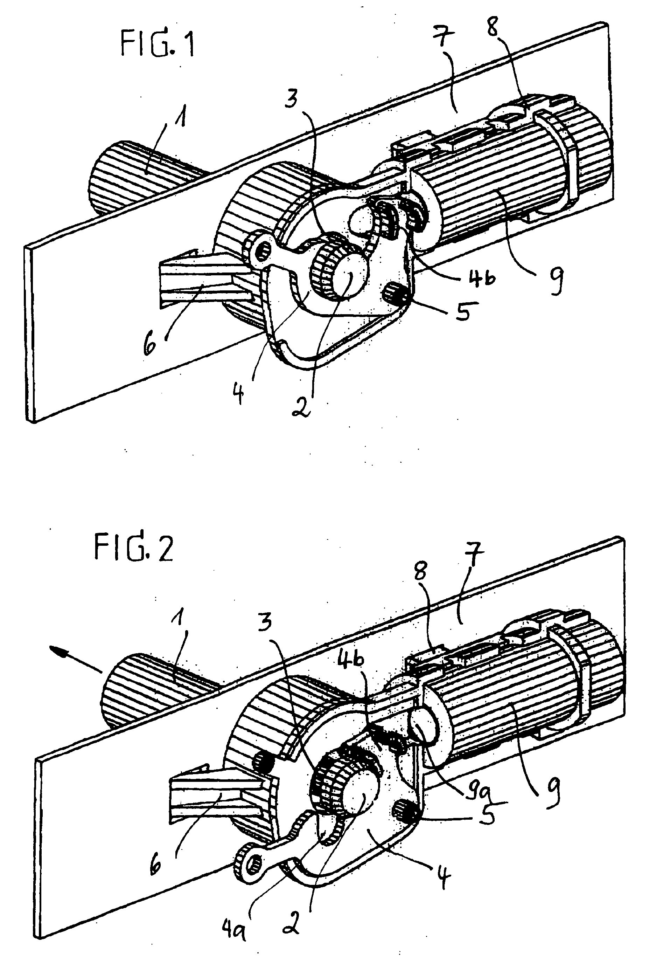

Die Figuren 1 und 2 zeigen ein lösbares Haltesystem für ein Überrollschutzsystem mit einem ausfahrbaren Überrollkörper.
Dieser (nicht dargestellte) Überrollkörper wird im Grundzustand (Fig. 1) gegen die Kraft einer Antriebs-Druckfeder (nicht dargestellt) niedergehalten, während Fig. 2 den ausgelösten Zustand zeigt.

Die Haltevorrichtung weist als Halteglied einen Zugstab 1 auf, der mit einem Ende auf geeignete Weise mit dem Überrollkörper mechanisch verbunden ist (nicht dargestellt). Bei einer vorteilhafterweise oder einfachen Konstruktion mit einem mittig angeordneten Federführungsbolzen wird dabei der Zugstab 1 durch den von der Antriebs-Druckfeder umhüllten Federführungsbolzen gebildet. Alternativ ist der Zugstab mit einer Traverse verbunden, welche die Schenkelenden eines U-förmig ausgebildeten Überrollbügels miteinander verbindet.

Am freien Ende 2 weist der Zugstab 1 eine umlaufende Nut 3 für einen Wirkeingriff mit dem Auslöseglied auf. Das Auslöseglied wird im dargestellten Ausführungsbeispiel durch einen Sperr-/Auslöseschieber 4 gebildet, der drehbar um die Achse 5 an einem Lagerbock 6 angelenkt ist, der seinerseits an einem fahrzeugfesten Kassettenteil 7 des Überrollsystems angebracht ist. Dieser Sperr-/Auslöseschieber 4 besitzt eine kreisbogenförmige Ausnehmung 4 a für eine lösbare formschlüssige Verbindung mit der umlaufenden Nut 3 am Zugstab 1, der unter der Vorspannung der Antriebs-Druckfedern steht. Im Grundzustand (Fig. 1) umfasst die Ausnehmung 4 a die Nut 3 und hält den Zugstab 1 (und damit auch den Überrollkörper) nieder.

Ebenfalls fahrzeugfest ist eine Halterung 8 für einen Aktuator angebracht, der im dargestellten Ausführungsbeispiel durch ein Pyroelement gebildet ist, das eine Zündpille enthält, die sensorgesteuert zündbar ist und dabei einen Stift 9 a ausstößt. Dieser Stift 9 a tritt dabei in Wirkverbindung mit einem Anschlag am Hebelarm 4 b des Dreh-Sperr-/Auslöseschiebers 4 und verdreht diesen Drehschieber gegen den Uhrzeigersinn. Dabei kommt, wie in Fig. 2 dargestellt, die Ausnehmung 4 a des Drehschiebers außer Wirkeingriff mit der Nut 3 des Zugstabes, so daß dieser mit dem Überrollkörper, aufgestellt durch die vorgespannten Antriebs-Druckfedem in Pfeilrichtung ausfahren kann.

Die Realisierung des Aktuators 9 durch ein pyrotechnisches Element ist ein bevorzugtes Ausführungsbeispiel, da dieses durch seinen Energieüberschuss sicher in der Lage ist, den Drehschieber zu verdrehen, auch unter einer starken Vorspannung der Antriebsfedem für den Überrollkörper. Grundsätzlich kann jedoch auch ein sogenannter Auslösemagnet oder ein anderes schnelles Antriebssystem hydraulisch pneumatisch, motorisch vorgesehen werden.

Anstelle eines drehbar gelagerten Sperrschiebers 4 kann auch ein entlang einer Kurvenbahn, vorzugsweise gradlinig in Schienen gleitender Sperrschieber vorgesehen sein, der ebenfalls eine die Nut 3 formschlüssig umfassende maulförmige, d.h. U-förmige Ausnehmung besitzt, die durch eine Längsverschiebung des Sperrschiebers aufgrund des ausgestoßenen Stiftes des Aktuators außer Wirkeingriff mit der Nut 3 des Zugstabes 1 bringbar ist. Die U-förmige Ausnehmung ist dabei so gestaltet, daß zumindest ihre beiden Schenkel im gehaltenen Zustand des Zugstabes in der Nut aufgenommen sind. Vorzugsweise ist der Steg zwischen beiden Schenkeln kreisbogenförmig konfiguriert derart, daß er auch formschlüssig in der Nut aufgenommen ist.

### Bezugszeichenliste

- 1: Zugstab
- 2: auslöseseitiges Ende (des Zugstabes)
- 3: umlaufende Nut
- 4: Sperr-/Auslöseschieber
- 5: Drehachse
- 6: Lagerbock
- 7: Kassettenteil
- 8: fahrzeugfeste Lagerung
- 9: Aktuator
- 9 a: Auslösestift

## Patentansprüche

1. Überrollschutzsystem für Kraftfahrzeuge, mit einem verfahrbar gehalterten Überrollkörper, der im Normalzustand gegen die Kraft von mindestens einer vorgespannten Antriebs-Druckfeder durch eine Haltevorrichtung in einer unteren, eingefahrenen Ruhelage haltbar ist, und unter Lösen der Haltevorrichtung durch die Federkraft der Antriebs-Druckfeder in eine verriegelte obere, schützende Stellung bringbar ist, wobei die Haltevorrichtung ein mit dem Überrollkörper verbundenes Halteglied und ein damit in lösbarer mechanischer Wirkverbindung stehendes Auslöseglied an einem fahrzeugfesten, sensor-gesteuerten Aktuator (9) aufweist, **dadurch gekennzeichnet, dass** das Halteglied durch einen Zugstab (1) mit einer zumindest teilweise umlaufenden Nut (3) und das Auslöseglied durch einen in einem fahrzeugfesten Lagerbock (6) gehalterten, formschlüssig in der Nut (3) aufnehmbaren und durch den Aktuator (9) in dem Lagerbock (6) aus einer haltenden, in eine freigebende Wirkstellung verdrehbaren oder längs verschiebbaren Sperr-/Auslöseschieber (4) gebildet ist.

2. Überrollschutzsystem nach Anspruch 1, **dadurch gekennzeichnet, dass** der Sperr-/Auslöseschieber (4) drehbar an dem Lagerbock (6) angelenkt ist.

3. Überrollschutzsystem nach Anspruch 2, **dadurch gekennzeichnet, dass** der Zugstab (1) zumindest an seinem Ende (2) einen kreisförmigen Querschnitt aufweist und der Sperr-/Auslöseschieber (4) eine kreisbogenförmige Ausnehmung (4 a) für den formschlüssigen Wirkeingriff mit der Nut (3) besitzt.

4. Überrollschutzsystem nach Anspruch 2 oder 3, **dadurch gekennzeichnet, dass** der Sperr-/Auslöseschieber einen Hebelarm (4 b) für einen Wirkeingriff mit einem Auslösestift (9 a) des Aktuators (9) aufweist.

5. Überrollschutzsystem nach Anspruch 1, **dadurch gekennzeichnet, dass** der Sperr-/Auslöseschieber linear verschiebbar in dem Lagerbock gehaltert ist und eine U-förmige Ausnehmung für den Wirkeingriff mit der Nut aufweist.

6. Überrollschutzsystem nach Anspruch 5, **dadurch gekennzeichnet, dass** die U-förmige Ausnehmung so konfiguriert ist, daß sowohl ihre Schenkel als auch der Steg zwischen ihnen die Nut im haltenden Zustand umfassen.

7. Überrollschutzsystem nach einem der Ansprüche 1 bis 6, **dadurch gekennzeichnet, dass** der Zugstab (1) als Federführungsbolzen für die Antriebs-Druckfeder ausgebildet ist.

8. Überrollschutzsystem nach einem der Ansprüche 1 bis 7, **dadurch gekennzeichnet, dass** der Aktuator (9) als stiftausstoßendes pyrotechnisches Auslöseglied ausgebildet ist.

## Claims

1. Rollover protection device for vehicles, with a rollbar which is mounted in a movable manner and, in the normal state, can be held by a holding device in a lower, retracted rest position counter to the force of at least one prestressed driving compression spring, and, upon release of the holding device, can be brought by the spring force of the driving compression spring into a locked, upper protective position, the holding device having a holding element connected to the rollbar and a triggering element, which is in releasable, mechanical operative connection therewith, on a sensor-controlled actuator (9) fixed on the vehicle, **characterized in that** the holding element is formed by a tension bar (1) having an at least partially encircling groove (3) and the triggering element is formed by a locking/triggering slide (4) which is secured in a bearing bracket (6) fixed on the vehicle, can be held in a form-fitting manner in the groove (3) and can be rotated or displaced longitudinally by the actuator (9) in the bearing bracket (6) from a holding operative position into a releasing operative position.

2. Rollover protection device according to Claim 1, **characterized in that** the locking/triggering slide (4) is coupled rotatably to the bearing bracket (6).

3. Rollover protection device according to Claim 2, **characterized in that** the tension bar (1) has a circular cross section at least at its end (2) and the locking/triggering slide (4) has a circular-arc-shaped recess (4a) for the form-fitting operative engagement with the groove (3).

4. Rollover protection device according to Claim 2 or 3, **characterized in that** the locking/triggering slide has a lever arm (4b) for an operative engagement with a triggering pin (9a) of the actuator (9).

5. Rollover protection device according to Claim 1, **characterized in that** the locking/triggering slide is secured in a linearly displaceable manner in the bearing bracket and has a U-shaped recess for the operative engagement with the groove.

6. Rollover protection device according to Claim 5, **characterized in that** the U-shaped recess is configured in such a manner that both its limbs and the web between them surround the groove in the holding state.

7. Rollover protection device according to one of Claims 1 to 6, **characterized in that** the tension bar (1) is designed as a spring guide bolt for the driving compression spring.

8. Rollover protection device according to one of Claims 1 to 7, **characterized in that** the actuator (9) is designed as a pin-ejecting, pyrotechnic triggering element.

## Revendications

1. Système de protection au retournement pour des véhicules automobiles, avec un corps de protection au retournement monté à déplacement qui, dans l'état normal, peut être maintenu par un dispositif de retenue dans une position de repos rentrée inférieure à l'encontre de la force d'au moins un ressort précontraint de pression d'entraînement et qui, en libérant le dispositif de retenue, peut être amené par la force de ressort du ressort de pression d'entraînement dans une position supérieure verrouillée de protection, sachant que le dispositif de retenue présente un organe de maintien relié au corps de protection au retournement et un élément de libération qui se trouve en liaison fonctionnelle mécanique libérable avec cet organe et qui se trouve sur un actionneur (9) solidaire du véhicule et commandé par capteur, **caractérisé en ce que** l'organe de maintien est formé par une barre de traction (1) pourvue d'au moins une rainure (3) partiellement entourante, et l'élément de libération est formé par un coulisseau (4) d'arrêt et de libération qui est monté dans un bloc de palier (6) solidaire du véhicule, qui peut être reçu en engagement positif dans la rainure (3) et qui, par l'actionneur (9), peut être tourné ou déplacé longitudinalement dans le bloc de palier (6) d'une position active de maintien dans une position active de libération.

2. Système de protection au retournement selon la revendication 1, **caractérisé en ce que** le coulisseau (4) d'arrêt et de libération est articulé à rotation sur le bloc de palier (6).

3. Système de protection au retournement selon la revendication 2, **caractérisé en ce que** la barre de traction (1) présente au moins à son extrémité (2) une section circulaire, et le coulisseau (4) d'arrêt et de libération possède un évidement (4a) en arc de cercle pour l'engagement actif positif avec la rainure (3).

4. Système de protection au retournement selon la revendication 2 ou 3, **caractérisé en ce que** le coulisseau d'arrêt et de libération présente un bras de levier (4b) pour un engagement actif avec une broche de libération (9a) de l'actionneur (9).

5. Système de protection au retournement selon la revendication 1, **caractérisé en ce que** le coulisseau d'arrêt et de libération est maintenu à déplacement linéaire dans le bloc de palier et présente un évidement en forme de U pour l'engagement actif avec la rainure.

6. Système de protection au retournement selon la revendication 5, **caractérisé en ce que** l'évidement en forme de U est configuré de telle sorte qu'à la fois ses branches et le dos du U embrassent entre eux la rainure dans l'état de maintien.

7. Système de protection au retournement selon l'une quelconque des revendications 1 à 6, **caractérisé en ce que** la barre de traction (1) est réalisée sous forme de boulon de guidage de ressort pour le ressort de pression d'entraînement.

8. Système de protection au retournement selon l'une quelconque des revendications 1 à 7, **caractérisé en ce que** l'actionneur (9) est réalisé sous forme d'élément de libération pyrotechnique expulsant la broche.
